# EUROPÄISCHE PATENTANMELDUNG

(11) **EP 2 253 949 A1**
(43) Veröffentlichungstag der Anmeldung: **24.11.2010**
(21) Anmeldenummer: 09006905.5
(22) Anmeldetag: 22.05.2009
(51) Int. Cl.: G01N 21/896

(54) **Vorrichtung und Verfahren zum Detektieren eines optisch ablenkenden und/oder polarisationsdrehenden Fehlers**

(71) Anmelder: Dr. Schenk GmbH Industriemesstechnik, 82152 Planegg/Martinsried (DE)
(72) Erfinder: Wick, Dr. Manfred Theo, 82110 Germering (DE)
(74) Vertreter: Manitz, Finsterwald & Partner GbR

(57) **Zusammenfassung**

Vorrichtung zum Detektieren eines optisch ablenkenden und/oder polarisationsdrehenden Fehlers in einem Inspektionsbereich (10) eines zu untersuchenden Gegenstands (12), umfassend mindestens eine Lichtquelle (14) zum Ausstrahlen von gerichtetem Licht (16) in Richtung des Inspektionsbereichs, einen für das Licht der Lichtquelle empfindlichen Sensor (18), welcher relativ zu der Lichtquelle angeordnet ist, um die Intensität des von dem Gegenstand reflektierten oder transmittierten Lichts der Lichtquelle in wenigstens einer Richtung ortsaufgelöst zu erfassen, und eine mit dem Sensor verbundene Auswerteeinheit, die dafür ausgelegt ist anhand der Stärke einer lokalen Abweichung der Intensität des durch den Sensor erfassten Lichts bezogen auf eine Referenzintensität das Ausmaß der ablenkenden und/oder polarisationsdrehenden Wirkung eines Fehlers zu ermitteln. Die Erfindung betrifft auch ein entsprechendes Verfahren zum Detektieren eines optisch ablenkenden und/oder polarisationsdrehenden Fehlers.

## Beschreibung

Die Erfindung betrifft eine Vorrichtung und ein Verfahren zum Detektieren eines optisch ablenkenden und/oder polarisationsdrehenden Fehlers in einem Inspektionsbereich eines zu untersuchenden Gegenstands.

Als zu untersuchende Gegenstände werden hier sowohl optisch transparente Medien als auch Oberflächen und Schichtsysteme mit Reflexionseigenschaften in Betracht gezogen. Zu untersuchende Gegenstände können ferner nicht nur endlose Bahnmaterialien, wie beispielsweise Glasbänder oder Kunststofffolien, sondern auch Stückgüter und Plattenmaterialien, wie beispielsweise Flachbildschirmfrontplatten, Papierblätter, Metallfolien, optische Linsen und Gläser, sowie allgemein Oberflächenmaterialien und Beschichtungen umfassen, wie beispielsweise Verbundmaterialien, Folienschichtsysteme, Lackschichten und Sputterschichten auf Oberflächen.

Ein Beispiel für ein Schichtsystem auf einem nicht transparenten Medium ist eine Schutzfolie auf einem Metallspiegel. Unerwünschte optisch ablenkende Fehler können hierbei durch Verwerfungen der Schutzfolie, Luftblasen darunter oder Schichtdickenschwankungen einer etwaigen Klebeschicht zwischen Schutzfolie und Metallspiegel gebildet sein.

Entsprechend kann ein optisch ablenkender Fehler in einem transparenten Multischichtsystem durch eine ungleichmäßig aufgebrachte Kleberschicht z.B. zwischen zwei Polyethylen-Folien, insbesondere durch ein Fehlen oder eine lokale Übermenge an Klebstoff, verursacht sein.

Ein Beispiel für einen optisch ablenkenden Fehler in einem gezogenen Glasband ist eine durch die Herstellung des Glasbandes bedingte lange und schmale Dichteschwankung, die sich in Längsrichtung des Glasbandes erstreckt. Ein solcher Fehler wird auch als Ream-Fehler bezeichnet.

Ein Beispiel für einen polarisationsdrehenden Fehler ist eine Verspannung oder Dehnung in einer Polarisatorfolie. Weitere Beispiele für polarisationsdrehende Fehler sind Dehnungsstellen, die beim Aufbringen einer Schutzfolie in dieser entstehen können, sowie Verspannungen, die beim Verbinden von Verbundmaterialien auftreten können.

Zur Bestimmung der optischen Qualität von Bauglas wird in der Glasindustrie regelmäßig der so genannte "Zebratest" gemäß der Norm EN 572 Teil 2 herangezogen. Dieser Test besteht letztlich aus einer manuellen Qualitätskontrolle auf der Grundlage einer Sichtprüfung eines Kontrolleurs. Konkret betrachtet der Kontrolleur ein vorgegebenes, unter 45° geneigtes Raster aus schwarzen und weißen Streifen - das Zebramuster - durch das zu prüfende Glas. Das Glas wird hierbei in einer Halterung gehalten, die sich um eine vertikale Achse drehen lässt. Die Entfernung zwischen dem Raster und dem zu prüfenden Glas beträgt normgemäß 4,5 m. Der Kontrolleur steht ruhig, 9 m vom Zentrum des Rasters entfernt, so dass er auf der optischen Achse senkrecht auf die Rasterebene blickt. Das zu prüfende Glas wird um die vertikale Achse so weit gedreht, bis der Kontrolleur ab einem bestimmten Drehwinkel, Zebrawinkel α_{Zebra} genannt, keine Verzerrungen des Zebramusters mehr feststellt. Der ermittelte Zebrawinkel α_{Zebra} dient als Kriterium zur Beurteilung der Qualität des Glases.

Der Zebratest ist insofern problematisch, als er auf einer subjektiven Entscheidung des Kontrolleurs beruht, die nicht nur von der Erfahrung und der generellen Empfindlichkeit des Kontrolleurs sondern auch von seiner Tagesform getragen wird. Eine Vergleichbarkeit und Reproduzierbarkeit, insbesondere über längere Zeiträume hinweg, ist daher nahezu ausgeschlossen.

Darüber hinaus ist der Zebratest aufgrund der Verdrehung des zu prüfenden Glases, der Abmessungen des Testaufbaus von mehr als 9 m und der typischen Glasabmessungen im Bereich von mehreren Quadratmetern im Wesentlichen auf stichprobenartige (offline) Prüfungen beschränkt und für Inline-Inspektionen mit hohem Durchsatz nahezu ausgeschlossen.

Der Erfindung liegt die Aufgabe zugrunde, eine Vorrichtung und ein Verfahren zum Detektieren eines optisch ablenkenden und/oder polarisationsdrehenden Fehlers zu schaffen, welche bzw. welches eine automatisierte Fehlerdetektion und insbesondere eine Inline-Inspektion von Bahnmaterialien bei gleichzeitig erhöhter Zuverlässigkeit und Reproduzierbarkeit ermöglicht.

Zur Lösung der Aufgabe sind eine Vorrichtung und ein Verfahren gemäß den unabhängigen Ansprüchen vorgesehen.

Der Erfindung liegt der allgemeine Gedanke zugrunde, einen Inspektionsbereich eines zu untersuchenden Gegenstands mittels einer Lichtquelle für gerichtetes, d.h. nicht diffuses, Licht auszuleuchten und die Intensität des von dem Gegenstand reflektierten oder transmittierten Lichts der Lichtquelle mittels eines Sensors in wenigstens einer Richtung ortsaufgelöst zu erfassen und durch eine mit dem Sensor verbundene Auswerteeinheit auszuwerten.

Die Verwendung von Lichtquelle, Sensor und Auswerteeinheit erlaubt eine automatisierte Fehlerdetektion, insbesondere unter Ausschluss der menschlichen Komponente in Form eines Kontrolleurs. Dies führt nicht nur zu einer erhöhten Reproduzierbarkeit der Detektionsergebnisse, sondern gewährleistet auch, dass der Fehlerdetektion dauerhaft gleich bleibende Beurteilungskriterien zugrunde gelegt werden.

Darüber hinaus lassen sich die relevanten optischen Komponenten derart relativ zueinander anordnen, dass die erfindungsgemäße Vorrichtung nicht nur eine besonders kompakte Baugröße aufweist, sondern auch derart um ein zu untersuchendes Bahnmaterial herum gebaut werden kann, dass eine Inline-Inspektion möglich ist.

Konkret wird der zu untersuchende Gegenstand erfindungsgemäß mit einem gerichteten Lichtbündel bestrahlt, im Fall eines transparenten Gegenstands durchleuchtet, und das von dem Gegenstand projizierte Lichtbündel - ohne Zwischenabbildung in einer Projektionsebene, d.h. ohne eine zusätzliche Abbildung des realen Bildes auf einer Projektionsfläche - direkt mittels des Sensors detektiert. Mit anderen Worten wird die Projektion der Lichtquelle durch den zu untersuchenden Gegenstand betrachtet. Hierdurch werden kleine Kontrastfehler in der Abtastebene für den Sensor nur sehr unscharf und verwaschen sichtbar. Pseudofehler durch eigentliche signalintensive Kontrastfehler werden vermieden. Eine aufwändige und teure Abbildungsoptik ist erfindungsgemäß nicht erforderlich. Auf verschmutzungs- und temperaturempfindliche optische Elemente, wie z.B. ein Kameraobjektiv oder einen Projektionsschirm, kann verzichtet werden. Stattdessen ist erfindungsgemäß zusätzlich zu dem Sensor gegebenenfalls lediglich eine Strahlaufweitung und Strahllenkung im Beleuchtungsstrahlengang vor der Inspektionsebene erforderlich, die im einfachsten Fall durch die Lichtquelle selbst bereitgestellt wird, wodurch die erfindungsgemäße Vorrichtung nicht nur einen minimalen Bauraum benötigt, sondern auch mit einem besonders geringen wirtschaftlichen Aufwand herstellbar ist.

Als Maß für die optisch ablenkende Wirkung eines detektierten Fehlers wird erfindungsgemäß eine lokale Abweichung, insbesondere Abschwächung, der durch den Sensor detektierten Lichtintensität von einer Referenzintensität herangezogen. Die Referenzintensität kann durch Leermessungen, beispielsweise Luftmessungen ohne Gegenstand, oder durch Messungen an geeigneten Normalen, wie beispielsweise fehlerlosen Standardkörpern, aufgenommen werden.

Da die erfindungsgemäße Fehlerdetektion auf der Verwendung von gerichtetem Licht beruht, führt ein optisch ablenkender Fehler in dem Inspektionsbereich des zu untersuchenden Gegenstands zu einer gewissen lokalen Abschattung des in den Inspektionsbereich ausgestrahlten Lichtbündels, weshalb das erfindungsgemäße Verfahren auch als eine Art von Schattenwurfverfahren bezeichnet werden kann.

Die durch einen Fehler in dem zu untersuchenden Gegenstand verursachte Abschattung wird von dem Sensor als eine gegenüber der Referenzintensität lokal verringerten Lichtintensität erfasst. Dabei gilt insbesondere bei der Detektion von Ream-Fehlern, dass die Reduzierung der erfassten Lichtintensität umso stärker ausfällt, je ausgeprägter der Fehler ist. Unter Voraussetzung einer entsprechenden Kalibrierung des Systems lässt sich die fehlerbedingte Abschwächung der Lichtintensität und somit die Qualität des zu untersuchenden Gegenstands in Form eines aus dem Zebratest bekannten Zebrawinkels α_{Zebra} ausgeben. Auf diese Weise kann auf einfache und kostengünstige Weise, insbesondere auch an endlosen Bahnmaterialien, eine zuverlässige Qualitätskontrolle durchgeführt werden.

Ein weiterer Vorteil der Erfindung liegt darin, dass im Fall einer Detektion optisch ablenkender Fehler der Dynamikbereich und der Arbeitspunkt der Detektionsempfindlichkeit mit einfachen optischen Mitteln der Inspektionsaufgabe anpasst werden können. Als grobe Regel gilt, dass die Vorrichtung bzw. das Verfahren umso ablenkungsempfindlicher, d.h. empfindlicher für kleinere Winkelablenkungen ist, je weiter der Sensor von dem zu untersuchenden Gegenstand entfernt angeordnet ist. Eine Verschiebung des Sensors aus der optischen Achse oder das Ausblenden bestimmter Winkelbereiche mittels geeigneter Blenden verschiebt den Dynamikbereich der Winkelempfindlichkeit asymmetrisch.

Vorteilhafte Ausbildungen der Erfindung sind den Unteransprüchen, der Beschreibung und der Zeichnung zu entnehmen.

Gemäß einer Ausführungsform der erfindungsgemäßen Vorrichtung ist eine Antriebseinrichtung vorgesehen, um die Lichtquelle und den Sensor einerseits und den zu untersuchenden Gegenstand andererseits relativ zueinander zu bewegen. Bei der Inspektion eines endlosen Bahnmaterials wird üblicherweise die Detektionsvorrichtung stationär angeordnet sein und das zu untersuchende Bahnmaterial an dieser vorbei bewegt werden. Grundsätzlich ist aber auch eine Anordnung denkbar, bei welcher der zu untersuchende Gegenstand stationär gelagert ist und die Detektionsvorrichtung an diesem vorbei bewegt wird.

Um eine möglichst effiziente Inspektion des zu untersuchenden Gegenstands zu ermöglichen, ist die Richtung der Ortsauflösung des Sensors bevorzugt quer und insbesondere rechtwinklig zu der Richtung der Bewegung orientiert. Auf diese Weise ist es mittels eines die gesamte Breite des zu untersuchenden Gegenstands erfassenden Sensors möglich, den Gegenstand während einer einzigen Bewegung in Längsrichtung des Gegenstands zu untersuchen.

Ein Zeilenkamerasensor stellt eine besonders einfache und kostengünstige Variante eines geeigneten Sensors dar. Beispielsweise kann es sich hierbei um einen Zeilenkamerasensor handeln, wie er auch in allgemein gebräuchlichen Flachbettscannern des DIN A4-Formats zum Einsatz kommt. Eine Zeilenkamera oder ein Zeilenkamerasystem eignet sich besonders gut zur Inspektion eines sich daran vorbei bewegenden Endlos-oder Plattenmaterials. Das Bild bzw. die Spur des Inspektionsbereichs entsteht hierbei durch das Aneinanderfügen der Abfolge von Videozeilen bzw. von Messwerten des Sensors, synchronisiert mit der Bewegung des zu untersuchenden Gegenstands. Grundsätzlich kann es sich bei dem Sensor aber auch um eine Flächenkamera handeln, die ein zweidimensionales Sensorfeld aufweist und von sich aus ein zweidimensionales Bild des Inspektionsbereichs aufnimmt.

Gemäß einer besonders vorteilhaften Ausführungsform ist die Lichtquelle derart ausgerichtet, dass das in den Inspektionsbereich ausgestrahlte Licht unter einem Einstrahlwinkel im Bereich von 5° bis 30° auf die Oberfläche des zu untersuchenden Gegenstands trifft. Je flacher der Einstrahlwinkel gewählt wird, desto höher ist die Empfindlichkeit des Sensors bezüglich optisch ablenkender Fehler. Gleichzeitig nimmt die benötigte Sensorbreite mit flacher werdenden Einstrahlwinkeln nichtlinear ab. So ist es beispielsweise möglich, unter einem Einstrahlwinkel von 8° mit einem DIN A4 breiten Zeilenkamerasensor ein Glasband zu untersuchen, welches eine Breite von 2 m aufweist. Durch die nicht senkrechte Ausrichtung des optischen Aufbaus zur Oberfläche des zu untersuchenden Gegenstands können des weiteren nicht nur mehrfache Reflexionen entfallen, sondern es sind auch einzeloberflächenselektive Inspektionen bzw. die Bestimmung der Tiefe eines detektierten Fehlers möglich.

Gemäß einer weiteren Ausführungsform ist der Einstrahlwinkel, unter dem das in den Inspektionsbereich ausgestrahlte Licht auf die Oberfläche des zu untersuchenden Gegenstands trifft, variabel einstellbar. Die Sensorposition und/oder der Sensorwinkel können dabei unverändert bleiben, solange sichergestellt ist, dass der Sensor den Inspektionsbereich unter allen Einstrahlwinkeln vollständig erfasst. Vor allem für besonders flache Einstrahlwinkel ist Letzteres einfach realisierbar, insbesondere wenn der Sensor nahe an dem zu untersuchenden Gegenstand angeordnet ist und/oder der zu untersuchende Gegenstand vergleichsweise kleinformatig ist.

Unterschiedliche Einstrahlwinkel lassen sich besonders einfach durch die Verwendung von wenigstens zwei zueinander beabstandeten Lichtquellen realisieren, die Licht unter verschiedenen Winkeln in den Inspektionsbereich ausstrahlen. Hierdurch können einfache Mehrfachwinkelmessungen durchgeführt werden, ohne dass der zu untersuchende Gegenstand und der Strahlengang relativ zueinander verdreht werden müssen. Durch elektronisches Multiplexing kann zwischen den verschiedenen Lichtquellen hin- und hergeschaltet werden, um eine Mehrfachwinkelmessung in Echtzeit zu ermöglichen.

Die wenigstens zwei Lichtquellen können gleichartiges Licht ausstrahlen. Grundsätzlich ist es aber auch denkbar, dass wenigstens zwei Lichtquellen vorgesehen sind, die verschiedenartiges Licht in den Inspektionsbereich ausstrahlen, wobei sich das Licht beispielsweise in seiner Wellenlänge, in seiner spektralen Bandbreite, in seiner Intensität und/oder Polarisation unterscheiden kann. Die Verwendung verschiedenartiger Lichtquellen ermöglicht, insbesondere mittels elektronischem Multiplexing, beispielsweise Kompositmaterialien selektiv zu untersuchen oder verschiedene optische Eigenschaften eines Materials zu testen.

Ferner kann das in den Inspektionsbereich eingestrahlte Licht polarisiert und ein Polarisationsfilter zwischen dem zu untersuchenden Gegenstand und dem Sensor angeordnet sein. Dies ermöglicht es, eine Phasenverschiebung oder Polarisationsdrehung im durch den Sensor erfassten Licht als Maß für eine Fehlstellenbildung heranzuziehen.

Gemäß einer weiteren bevorzugten Ausführungsform ist eine Kondensorlinse zwischen der Lichtquelle und dem Inspektionsbereich angeordnet, um einen kollimierten Lichtstrahl zu erzeugen, dessen projizierter Durchmesser mindestens so groß ist wie derjenige des Inspektionsbereichs. Durch die kollimierte Strahlführung können der Beleuchtungsstrahlengang und die Sensorposition in einem weiten Bereich beliebig variiert und damit den jeweiligen örtlichen und/oder anwendungsspezifischen Gegebenheiten angepasst werden. Dies ist vor allem in extremen Einbausituationen von Bedeutung, wie beispielsweise in der Glasindustrie, wo Temperaturen von deutlich über 100 °C keine Seltenheit sind und die Lichtquelle und der Sensor einen gewissen Sicherheitsabstand zu dem zu untersuchenden Glas aufweisen müssen.

Die Lichtquelle kann eine Leuchtdiode, einen Laser, eine Halogenlampe, eine Metalldampflampe oder einen Projektor, z.B. einen Overheadprojektor oder Beamer, umfassen. Vorteilhafterweise wird das von der Lichtquelle ausgestrahlte Lichtbündel mittels einer geeigneten Beleuchtungsoptik zum Aufweiten und Ausrichten des Strahlengangs aufbereitet. Als Beispiel sei hierfür die Abbildungsoptik eines Diaprojektors genannt, welche ein gerichtetes, homogenes und intensives Strahlprofil durch ein Dia projiziert.

Wichtig ist, dass die verwendete Lichtquelle eine signifikante Richtwirkung, d.h. also "abbildende" Eigenschaften aufweist. Eine großflächige, rein diffuse Lichtquelle, wie z.B. eine Flachbettleuchtstoffröhre ist unbrauchbar. Eine derartige großflächig und breitfächrig, d.h. also diffus, abstrahlende Lichtquelle würde jeden Punkt des Inspektionsbereichs aus einer breiten Winkelverteilung beleuchten, d.h. die zum effektiven Schattenwurf benötigte Richtwirkung würde fehlen. Aus jedem Objektpunkt würde folglich eine Vielzahl breit verstreut liegender Abbildungspunkte in der Sensorebene erzeugt werden, und der Kontrast würde sinken.

Das Licht einer rein diffus abstrahlenden Lichtquelle kann mittels geeigneter Filter zu gerichtetem Licht aufbereitet werden, z.B. mittels eines Raumfilters oder mittels einer Zwischenabbildung und Blenden. In diesem Fall ist das Gesamtsystem bestehend aus der eigentlichen primären Lichtquelle und der Beleuchtungsoptik als Lichtquelle anzusehen. Entscheidend ist die effektive Richtwirkung des auf den zu untersuchenden Gegenstand treffenden Lichtbündels.

Ein Beispiel für einen Raumfilter stellt eine Lochblende im Beleuchtungsstrahlengang dar. Der Durchmesser der Lochblende definiert den effektiven Querschnitt der Lichtquelle und kann nahezu punktförmig sein, was allerdings auf Kosten der Beleuchtungsintensität geht. Ein derartiger optischer Filter kann grundsätzlich auch im Abbildungsstrahlengang eingefügt werden. Ein Beispiel für eine derartige Anordnung wäre eine Lochkamera.

Nachfolgend wird die Erfindung rein beispielhaft anhand vorteilhafter Ausführungsformen unter Bezugnahme auf die beigefügte Zeichnung beschrieben. Es zeigen:
- Fig. 1: eine Prinzipskizze einer ersten Ausführungsform einer erfindungsgemäßen Vorrichtung;
- Fig. 2: eine Prinzipskizze der Wirkungsweise der Vorrichtung von Fig. 1 bei der Detektion eines optisch ablenkenden Fehlers;
- Fig. 3: eine Prinzipskizze einer zweiten Ausführungsform einer erfindungsgemäßen Vorrichtung;
- Fig. 4: eine Prinzipskizze einer dritten Ausführungsform einer erfindungsgemäßen Vorrichtung; und
- Fig. 5: eine Prinzipskizze einer vierten Ausführungsform einer erfindungsgemäßen Vorrichtung.

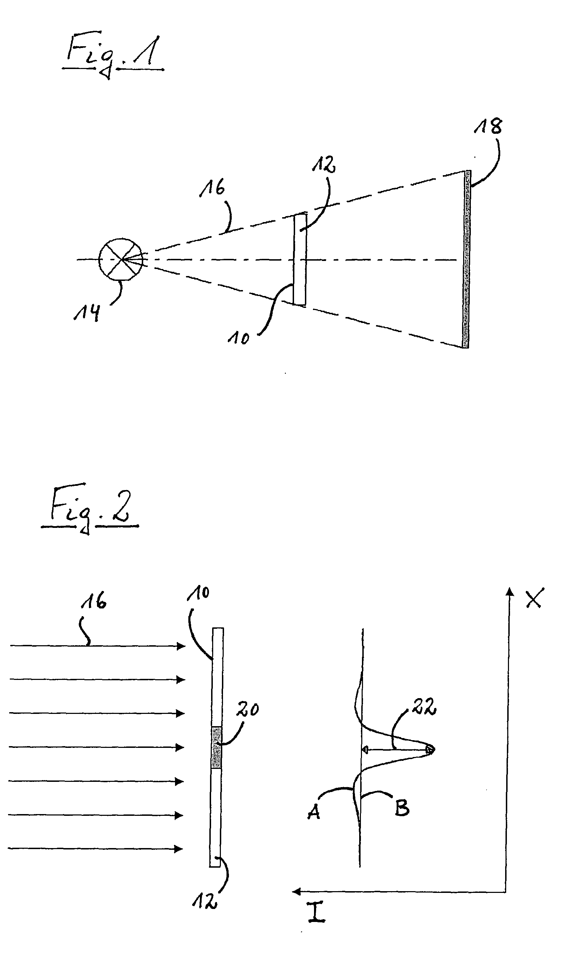

In Fig. 1 ist eine erste Ausführungsform einer erfindungsgemäßen Vorrichtung zum Detektieren eines optisch ablenkenden Fehlers in einem Inspektionsbereich 10 eines zu untersuchenden Gegenstands 12 gezeigt. Bei dem zu untersuchenden Gegenstand 12 handelt es sich hier um einen transparenten Gegenstand, wie beispielsweise eine Glasscheibe oder ein Glasband. Der zu detektierende optisch ablenkende Fehler ist ein so genannter Ream-Fehler, d.h. eine herstellungsbedingte schmale und lang gezogene Dichteschwankung des Glasmaterials, welche typischerweise in der Ziehrichtung des Glases orientiert ist.

Die Vorrichtung umfasst eine Lichtquelle 14, welche den Gegenstand 12 über die gesamte Inspektionsbreite mit gerichtetem Licht 16 ausleuchtet. Der Inspektionsbereich 10 kann sich über die gesamte Breite des Gegenstands 12 erstrecken.

Die Lichtquelle 14 kann eine Leuchtdiode, einen Laser, eine Halogenlampe, eine Metalldampflampe oder einen Projektor umfassen, z.B. einen Overheadprojektor oder Beamer. Entscheidend ist, dass sie gerichtetes Licht 16 und nicht diffuses Licht ausstrahlt.

Die Intensität des von dem Gegenstand 12 transmittierten Lichts 16 wird von einem für das Licht 16 der Lichtquelle 14 empfindlichen Sensor 18 erfasst. Dabei ist der Sensor 18 vorteilhafterweise so dimensioniert und derart relativ zu dem Gegenstand 12 angeordnet, dass die gesamte Breite des Inspektionsbereichs 10 im Sichtfeld des Sensors 18 liegt.

Der Sensor 18 ist so ausgebildet, dass er über die Breite des Inspektionsbereichs 10 gesehen eine ortsaufgelöste Erfassung der Intensität des Lichts 16 ermöglicht. Ist die Vorrichtung für stationäre Inspektionsanwendungen ausgelegt, so kann es sich bei dem Sensor 18 um eine Kamera mit einem zweidimensionalen Sensorfeld handeln, beispielsweise um eine CCD-Kamera. Ist die Vorrichtung hingegen für solche Anwendungen ausgelegt, bei denen der Gegenstand 12 und die Vorrichtung relativ zueinander bewegt werden, insbesondere ein endloses Glasband kontinuierlich an der Lichtquelle 14 und dem Sensor 18 vorbeibewegt wird, in Fig. 1 senkrecht zur Blattebene, so kann als Sensor 18 ein Zeilenkamerasensor verwendet werden, z.B. der Art, wie sie auch in Flachbettscannern zum Einsatz kommt.

Der Sensor 18 ist mit einer nicht dargestellten Auswerteeinheit verbunden, welche die von dem Sensor 18 ausgegebenen Signale verarbeitet und hinsichtlich möglicher Fehler in dem zu untersuchenden Gegenstand 12 auswertet.

Wie in Fig. 2 dargestellt ist, arbeitet die Vorrichtung nach dem Prinzip eines Schattenwurfverfahrens. Das bedeutet, dass ein optisch ablenkender Fehler 20, z.B. ein Ream-Fehler, in dem zu untersuchenden Gegenstand 12 zu einer lokalen Abweichung 22 der von dem Sensor 18 detektierten Lichtintensität (Kurve A) von einer Referenzintensität (Kurve B) führt.

Der in Fig. 2 dargestellte Ream-Fehler 20 wirkt nach Art einer konvexen Linse und wirft somit gewissermaßen einen Schatten auf den Sensor 18. Bei der detektierten Abweichung 22 der erfassten Lichtintensität (Kurve A) handelt es sich in diesem Fall also um eine lokale Abschwächung der Lichtintensität gegenüber der Referenzintensität (Kurve B). Dabei hängt der Grad der Abschwächung, d.h. die maximale Differenz zwischen den Kurven A und B von der Ausprägung des Fehlers 20 ab, d.h. die detektierte Abschattung ist umso intensiver, je stärker der Fehler 20 ausgeprägt ist.

Die Referenzintensität (Kurve B) kann beispielsweise durch eine Leermessung, d.h. eine Messung ohne einen Gegenstand 12, oder durch eine Messung an einem fehlerfreien Normgegenstand ermittelt werden.

Bei entsprechender Kalibrierung des Systems, kann das Ausmaß einer durch einen Fehler 20 verursachten Abweichung 22 in der erfassten Lichtintensität (Kurve A) von der Referenzintensität (Kurve B) in Form eines Wertes ausgegeben werden, welcher dem Zebrawinkel α_{Zebra} entspricht, der mittels des Zebratests an dem zu untersuchenden Gegenstand 12 ermittelt würde.

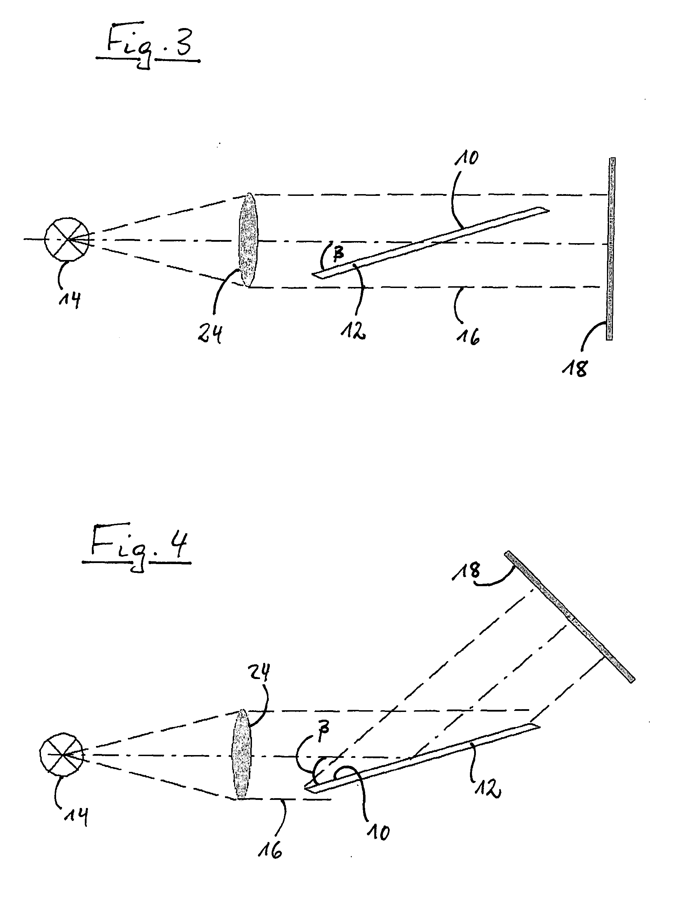

In Fig. 3 ist eine zweite Ausführungsform einer erfindungsgemäßen Vorrichtung dargestellt, die sich von der voranstehend beschriebenen ersten Ausführungsform darin unterscheidet, dass eine Kondensorlinse 24 zwischen der Lichtquelle 14 und dem zu untersuchenden Gegenstand 12 angeordnet ist.

Aufgrund der resultierenden kollimierten Strahlführung des Lichts 16 können der Beleuchtungsstrahlengang und die Position des Sensors 18 über einen weiten Bereich variiert und damit den anwendungsspezifischen Gegebenheiten angepasst werden.

Darüber hinaus unterscheidet sich die in Fig. 3 gezeigte zweite Ausführungsform von der voranstehend beschriebenen ersten Ausführungsform darin, dass das Licht 16 nicht unter einem rechten Winkel, sondern unter einem vergleichsweise flachen Einstrahlwinkel β, der im Bereich von 5° bis 30° liegen kann, in den zu untersuchenden Gegenstand 12 eingestrahlt wird.

Dieser flache Einstrahlwinkel β ermöglicht es, mit Hilfe eines Strahlenbündels, welches einen Durchmesser im Bereich von einigen Dezimetern aufweist, einen Inspektionsbereich 10 mit einer Breite im Bereich von einigen Metern auszuleuchten. Auf diese Weise sind kompakte Baugrößen auch solcher Vorrichtungen möglich, die zur Inspektion von beispielsweise Float-Glasbändern mit Breiten von mehreren Metern vorgesehen sind.

Konkret ist es unter einem Einstrahlwinkel von β = 8° beispielsweise möglich, ein Glasband, welches eine Breite von zwei Metern aufweist, mit einem Zeilenkamerasensor 18 der Breite DIN A4, wie er beispielsweise aus Flachbettscannern bekannt ist, zu untersuchen.

Darüber hinaus führt ein flacherer Einstrahlwinkel β zu einer höheren Empfindlichkeit der Vorrichtung bei der Detektion von optisch ablenkenden Fehlern, d.h. ein kleinerer Einstrahlwinkel β resultiert in größeren Signalintensitäten. Durch die Einstellung des Einstrahlwinkels β lassen sich somit der Dynamikbereich und der Arbeitspunkt der Detektionsempfindlichkeit der Vorrichtung der jeweiligen Inspektionsaufgabe anpassen.

In Fig. 4 ist eine dritte Ausführungsform einer erfindungsgemäßen Vorrichtung dargestellt, die sich von der anhand von Fig. 3 beschriebenen zweiten Ausführungsform lediglich darin unterscheidet, dass das von der Lichtquelle 14 in den Inspektionsbereich 10 des Gegenstands 12 eingestrahlte Licht 16 nicht durch den Gegenstand 12 transmittiert wird, sondern durch Reflexion an der Oberfläche des Gegenstands 12 zum Sensor 18 gelangt. Auf diese Weise eignet sich die Vorrichtung beispielsweise zur Oberflächeninspektion von nicht transparenten Gegenständen 12.

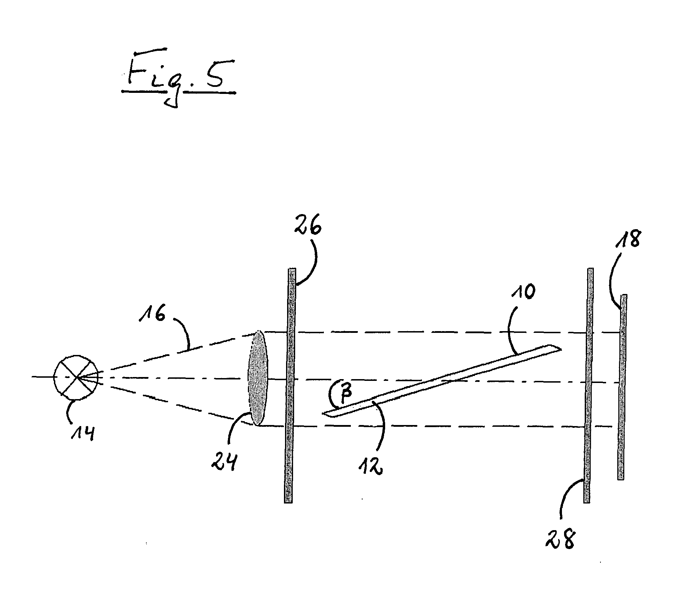

In Fig. 5 ist eine vierte Ausführungsform einer erfindungsgemäßen Vorrichtung dargestellt, die sich von der in Fig. 3 gezeigten zweiten Ausführungsform darin unterscheidet, dass zusätzlich ein Polarisatorbauteil 26 zwischen der Lichtquelle 14 und dem zu untersuchenden Gegenstand 12 angeordnet ist, welches dazu dient, das in den Inspektionsbereich 10 eingestrahlte Licht 16 zu polarisieren. Entsprechend ist ein Polarisationsfilterbauteil 28 zwischen dem zu untersuchenden Gegenstand 12 und dem Sensor 18 angeordnet. Mit Hilfe dieser Vorrichtung lassen sich auch polarisationsdrehende Fehler in dem zu untersuchenden Gegenstand 12 detektieren.

Die beiden Bauteile Polarisator 26 und Polarisationsfilter 28 können entsprechend der Inspektionsaufgabenstellung ausgeführt sein. Allgemein gesprochen definiert das Bauteil 26 die Polarisationseigenschaften des eingestrahlten Lichts, und das Bauteil 28 fragt gemäß der Inspektionsaufgabe in geeigneter Form etwaige Polarisationsänderungen ab.

Für die Messung einer direkten Polarisationsdrehung können die Bauteile 26 und 28 beispielsweise als gekreuzte Polarisatoren ausgeführt sein.

Zur Messung etwaiger Spannungsdoppelbrechungen kann das Bauteil 26 als eine Kombination aus einem linearen Polarisator gefolgt von einer λ/4-Platte ausgeführt sein, während das Bauteil 28 einen linearen Polarisator umfasst, der gegenüber dem Polarisator des Bauteils 26 um einen Winkel von 45° gedreht ist. Das Bauteil 26 erzeugt in diesem Fall zirkular polarisiertes Licht, und das Bauteil 28 fragt die durch die doppelbrechenden Eigenschaften der Probe erzeugten Polarisationsänderungen ab.

Es versteht sich, dass ein derartiges Polarisatorbauteil 26 und ein derartiges Polarisationsfilterbauteil 28 auch in einer Reflexionsanordnung zum Einsatz kommen können, wie sie in Fig. 4 gezeigt ist. Außerdem lässt sich auch die in Fig. 1 dargestellte erste Ausführungsform grundsätzlich in einer Reflexionsanordnung realisieren.

### Bezugszeichenliste

- 10: Inspektionsbereich
- 12: Gegenstand
- 14: Lichtquelle
- 16: Licht
- 18: Sensor
- 20: Fehler
- 22: Abweichung
- 24: Kondensorlinse
- 26: Polarisatorbauteil
- 28: Polarisationsfilterbauteil

## Patentansprüche

1. Vorrichtung zum Detektieren eines optisch ablenkenden und/oder polarisationsdrehenden Fehlers (20) in einem Inspektionsbereich (10) eines zu untersuchenden Gegenstands (12), umfassend
mindestens eine Lichtquelle (14) zum Ausstrahlen von gerichtetem Licht (16) in Richtung des Inspektionsbereichs (10),
einen für das Licht (16) der Lichtquelle (14) empfindlichen Sensor (18), welcher relativ zu der Lichtquelle (14) angeordnet ist, um die Intensität des von dem Gegenstand (12) reflektierten oder transmittierten Lichts (16) der Lichtquelle (14) in wenigstens einer Richtung ortsaufgelöst zu erfassen, und
eine mit dem Sensor (18) verbundene Auswerteeinheit, mittels welcher anhand der Stärke einer lokalen Abweichung (22) der Intensität des durch den Sensor (18) erfassten Lichts (16) bezogen auf eine Referenzintensität das Ausmaß der ablenkenden und/oder polarisationsdrehenden Wirkung eines Fehlers (20) ermittelbar ist.

2. Vorrichtung nach Anspruch 1,
**dadurch gekennzeichnet, dass**
eine Antriebseinrichtung vorgesehen ist, um die Lichtquelle (14) und den Sensor (18) einerseits und den Gegenstand (12) andererseits relativ zueinander zu bewegen.

3. Vorrichtung nach Anspruch 2,
**dadurch gekennzeichnet, dass**
die Richtung der Ortsauflösung des Sensors (18) quer und insbesondere rechtwinklig zu der Richtung der Bewegung orientiert ist.

4. Vorrichtung nach einem der vorstehenden Ansprüche,
**dadurch gekennzeichnet, dass**
der Sensor (18) ein Zeilenkamerasensor ist.

5. Vorrichtung nach einem der vorstehenden Ansprüche,
**dadurch gekennzeichnet, dass**
die Lichtquelle (14) derart ausgerichtet ist, dass das in den Inspektionsbereich (10) ausgestrahlte Licht (16) unter einem Winkel (β) im Bereich von 5° bis 30° auf die Oberfläche des zu untersuchenden Gegenstands (12) trifft.

6. Vorrichtung nach einem der vorstehenden Ansprüche,
**dadurch gekennzeichnet, dass**
der Winkel, unter dem das in den Inspektionsbereich (10) ausgestrahlte Licht (16) auf die Oberfläche des zu untersuchenden Gegenstands (12) trifft, variabel einstellbar ist.

7. Vorrichtung nach einem der vorstehenden Ansprüche,
**dadurch gekennzeichnet, dass**
wenigstens zwei Lichtquellen (14) vorgesehen sind, die Licht (16) unter verschiedenen Winkeln in den Inspektionsbereich (10) ausstrahlen.

8. Vorrichtung nach einem der vorstehenden Ansprüche,
**dadurch gekennzeichnet, dass**
wenigstens zwei Lichtquellen (14) vorgesehen sind, die gleichartiges oder verschiedenartiges Licht (16) in den Inspektionsbereich (10) ausstrahlen.

9. Vorrichtung nach einem der vorstehenden Ansprüche,
**dadurch gekennzeichnet, dass**
das in den Inspektionsbereich (10) einfallende Licht (16) polarisiert ist und ein Polarisationsfilter (28) zwischen dem Gegenstand (12) und dem Sensor (18) angeordnet ist.

10. Vorrichtung nach einem der vorstehenden Ansprüche,
**dadurch gekennzeichnet, dass**
eine Kondensorlinse (24) zwischen der Lichtquelle (14) und dem Inspektionsbereich (10) angeordnet ist, um einen kollimierten Lichtstrahl zu erzeugen, dessen projizierter Durchmesser mindestens so groß ist wie derjenige des Inspektionsbereichs (10).

11. Vorrichtung nach einem der vorstehenden Ansprüche,
**dadurch gekennzeichnet, dass**
die Lichtquelle (14) eine Leuchtdiode, einen Laser, eine Halogenlampe, eine Metalldampflampe oder einen Projektor, z.B. einen Overheadprojektor oder Beamer, umfasst.

12. Verfahren zum Detektieren eines optisch ablenkenden und/oder polarisationsdrehenden Fehlers (20) in einem Inspektionsbereich (10) eines zu untersuchenden Gegenstands (12), bei dem
mittels mindestens einer Lichtquelle (14) gerichtetes Licht (16) in Richtung des Inspektionsbereichs (10) ausgestrahlt wird,
mittels eines für das Licht (16) der Lichtquelle (14) empfindlichen Sensors (18) die Intensität des von dem Gegenstand (12) reflektierten oder transmittierten Lichts (16) der Lichtquelle (14) in wenigstens einer Richtung ortsaufgelöst erfasst wird und
anhand der Stärke einer lokalen Abweichung (22) der Intensität des durch den Sensor (18) erfassten Lichts (16) bezogen auf eine Referenzintensität das Ausmaß der ablenkenden und/oder polarisationsdrehenden Wirkung eines Fehlers (20) ermittelt wird.

13. Verfahren nach Anspruch 12,
**dadurch gekennzeichnet, dass**
das von dem Gegenstand (12) reflektierte oder transmittierte Licht (16) direkt und insbesondere ohne Zwischenabbildung in einer Projektionsebene durch den Sensor (18) erfasst wird.

14. Verfahren nach Anspruch 12 oder 13,
**dadurch gekennzeichnet, dass**
die Lichtquelle (14) und der Sensor (18) einerseits und der Gegenstand (12) andererseits relativ zueinander bewegt werden und die Intensität des von dem Gegenstand (12) reflektierten oder transmittierten Lichts (16) der Lichtquelle (14) wenigstens in einer Richtung ortsaufgelöst erfasst wird, die zu der Richtung der Bewegung quer und insbesondere rechtwinklig orientiert ist.

15. Verfahren nach einem der Ansprüche 12 bis 14,
**dadurch gekennzeichnet, dass**
der Inspektionsbereich (10) unter einem Winkel (β) im Bereich von 5° bis 30° durch die Lichtquelle (14) ausgeleuchtet wird.
